# EUROPÄISCHE PATENTSCHRIFT

(11) **EP 3 577 170 B1**
(45) Veröffentlichungstag und Bekanntmachung des Hinweises auf die Patenterteilung: **24.05.2023**
(21) Anmeldenummer: 18701253.9
(22) Anmeldetag: 05.01.2018
(51) Int. Cl.: C09D 5/00, A45D 40/20, B43K 19/14, C09D 101/00, C09D 101/18, C09D 7/63, B43K 23/00

(54) **BESCHICHTUNGSMITTEL SOWIE DESSEN VERWENDUNG**
COATING AGENT AND USE THEREOF
PRODUIT DE REVÊTEMENT ET SON UTILISATION

(30) Priorität: 03.02.2017 DE 102017001234
(43) Veröffentlichungstag der Anmeldung: 11.12.2019
(73) Patentinhaber: STAEDTLER Mars GmbH & Co. KG, 90427 Nürnberg (DE)
(72) Erfinder: KOHLER, Annette, 90439 Nürnberg (DE); LEHRER, Christa, 92318 Neumarkt (DE)
(86) Internationale Anmeldenummer: PCT/EP2018/050256
(87) Internationale Veröffentlichungsnummer: WO 2018/141500

(56) Entgegenhaltungen:
- EP-A2- 1 300 451
- US-A1- 2013 157 020
- DATABASE WPI Week 200826 Thomson Scientific, London, GB; AN 2008-D60422 XP002779264, -& JP 2007 246605 A (MITSUBISHI PENCIL CO LTD) 27. September 2007 (2007-09-27)
- DATABASE WPI Week 201356 Thomson Scientific, London, GB; AN 2013-B14536 XP002779265, & CN 102 746 747 A (GUANGDONG QIANYESONG CHEM CO LTD) 24. Oktober 2012 (2012-10-24)
- DATABASE WPI Week 197926 Thomson Scientific, London, GB; AN 1979-48559B XP002779266, & SU 621 708 A1 (FURNITURE RES TECHN INST) 21. Juli 1978 (1978-07-21)

## Beschreibung

Die Erfindung betrifft ein Beschichtungsmittel sowie dessen Verwendung.

Beschichtungsmittel sowie damit erzeugte Beschichtungen sind prinzipiell bekannt. Unter Beschichtungen werden nachfolgend Tauchkappen, Linierungen und/oder Komplettbeschichtungen verstanden.

Beispielsweise sind sogenannte NC-Lacksysteme bekannt, welche zur Beschichtung bzw. Lackierung der Oberflächen von holzgefassten Stiften bzw. deren Schäfte herangezogen werden.

Bekannte NC-Lacksysteme für holzgefasste Stifte bestehen überwiegend aus gefärbtem oder farblosem Nitrocellulose-Lack. Zur schnellen Trocknung derartiger Beschichtungen werden Lösemittel wie Ketone, Alkohole oder Acetate eingesetzt. Derartige Beschichtungsmittel weisen ggf. noch dispergierte Pigmente, Füllstoffe und weitere Zusätze auf.

Als nachteilig hat es sich bei derartigen NC-Lacksystemen herausgestellt, dass extrudierte Stifte mit Schäften auf Basis von WPC und/oder Kunststoff nicht oder nur schlecht bzw. schwer beschichtet werden können. Die mit bekannten NC-Lacksystemen erzeugten Beschichtungen auf den Schäften sind in der Haftung mangelhaft und platzen leicht ab.

Weiter ist aus der DE 299 08 890 U1 ein Beschichtungsmittel und System bekannt, zur Verbesserung der haptischen Empfindungen, die zur Handhabung dienende Oberfläche mit Griffflächen oder Griffnoppen bildenden erhabenen Strukturen aus Kunststoffmaterial versehen sein sollen.

Nachteilig hierbei ist es, dass derartige Beschichtungssysteme auf extrudierten Stiften mit Schäften aus WPC und/oder Kunststoff in flüssigen Zustand nicht sauber benetzen und im verfestigten Zustand nicht ausreichend haften.

Eine weitere bekannte Möglichkeit zur Beschichtung stellt die Folientechnik dar, bei der Schäfte komplett oder in Teilbereichen, wie beispielsweise mit sogenannten Tauchkappen am Stftende versehen werden können.

Das Haftungsproblem kann hierbei zwar verringert werden, jedoch ist das Verfahren zur Aufbringung derartiger Folien teuer und prozessual sehr aufwendig.

**Aufgabe** der vorliegenden Erfindung ist es daher, ein Beschichtungsmittel vorzuschlagen, um damit eine Beschichtung zu schaffen, womit die vorstehenden Nachteile vermieden werden und insbesondere eine gute Haftfähigkeit für Beschichtungen auf Schäften aus WPC und/oder Kunststoff zu gewährleisten. Weiter ist es Aufgabe der Erfindung den beschichteten Gegenständen ein hochwertiges bzw. dauerhaft hochwertiges Aussehen zu geben.

Diese Aufgabe wird mit der im Anspruch 1 beschriebenen Verwendung des Beschichtungsmittels gelöst. Vorteilhafte Ausführungen und Weiterbildungen sind mit den weiteren Ansprüchen umfasst.

Für die Verwendung derartiger Beschichtungsmittel zur Erzeugung von Beschichtungen wird die Oberflächenbeschichtung von Schreib-, Zeichen- oder Malgeräten, deren Schaftmaterial WPC und oder Kunststoffe beinhaltet.

Es hat sich überraschenderweise gezeigt, dass durch das Beschichtungsmittel gemäß Anspruch 1 extrudierte Stifte mit Schäften aus WPC und/oder Kunststoffen komplett beschichtet und/oder teilbeschichtet werden können und dass die Beschichtungen eine sehr gute Haftfähigkeit auf dem Untergrund aufweisen . Als Beispiele für Beschichtungen seien Tauchkappen, Linierungen und/oder vollflächige Beschichtung/Lackierungen genannt.

Verwendung der erfindungsgemäßen Lösung sind Beschichtungen, bzw. Oberflächen-Überzüge wie Tauchkappen, Linierungen und/oder vollflächige Lackierungen von Schreib-, Zeichen- oder Malgeräten.

Gelöst werden konnte die Aufgabe mit der Verwendung eines Beschichtungsmittels für die Oberflächenbeschichtung für Stifte zum Schreiben, Zeichnen oder Malen, mindestens bestehend aus mindestens einem Celluloseanteil, mindestens einem Bindemittel, mindestens einem Weichmacher und mindestens einem Haftvermittler, wobei der Haftvermittler als ein Silan mit funktionellen Gruppen ausgebildet ist.

Der Gehalt an Haftvermittler liegt in dem erfindungsgemäßen Beschichtungsmittel im Bereich von 1 bis 8 Gew.-%.

Unter Silan sind nachfolgend organofunktionelle Silane, insbesondere epoxifunktionelle Silane zu verstehen, einem Brückenbildner zwischen organischen Polymeren und anorganischen Materialien.

Derartige Silane ermöglichen eine bessere Haftung von NC-Lack-Beschichtungen auf einem kritischen Substrat, wie beispielsweise WPC und/oder Kunststoff.

Anhand einiger Beispiele wird die erfindungsgemäße Lösung nachfolgend näher dargestellt.

Hierbei sind die genannten Mengenangaben prozentuale Einzelwerte, die im Rahmen der Verarbeitbarkeit und der gewünschten Endeigenschaften, sowie der gegenseitigen Verträglichkeiten, teilweise variieren können.

### Rahmenbeispiel Beschichtungsmittel

| | |
|---|---|
| Cellulosebestandteil | 8 bis 22 Gew.-% |
| Lösemittel | 58 bis 77 Gew.-% |
| Co-Bindemittel | 4 bis 11 Gew.-% |
| Bindemittel | 2 bis 7 Gew.-% |
| Weichmacher | 3 bis 9 Gew.-% |
| Haftvermittler | 1 bis 8 Gew.-% |
| Farbmittel | 0 bis 14 Gew.-% |

### Rezepturbeispiel 1: farbloses Beschichtungsmittel

| | |
|---|---|
| Nitrocellulosechips mit Weichmacheranteil | 13 Gew.-% |
| Ethylacetat (Lösemittel) | 66 Gew.-% |
| Celluloseacetobutyrat (Co-BM) | 8,5 Gew.-% |
| Polyamidharz (Bindemittel) | 4 Gew.-% |
| Epoxidiertes Sojaöl (Weichmacher) | 6,5 Gew.-% |
| Epoxifunktionelles Silan (Haftvermittler) | 2 Gew.-% |

### Rezepturbeispiel 2: weißes Beschichtungsmittel

| | |
|---|---|
| Nitrocellulosechips mit Weichmacheranteil | 9 Gew.-% |
| Ethanol (Lösemittel) | 68 Gew.-% |
| Celluloseacetobutyrat | 6,0 Gew.-% |
| Polyamidharz (Bindemittel) | 3 Gew.-% |
| Epoxidiertes Sojaöl (Weichmacher) | 5 Gew.-% |
| Epoxifunktioelles Silan (Haftvermittler) | 4 Gew.% |
| Ruß (Farbmittel) | 5 Gew.% |

Der **Celluloseanteil** liegt in der erfindungsgemäßen Lösung als Nitrocellulose in Form von Nitrocellulosechips mit Weichmacheranteil, als pelletierte Nitrocellulose und/oder in phlegmatisierter, angefeuchteter Form vor. Als Anfeuchtungsmittel dienen dabei Wasser, Butanol, Ethanol oder Isopropanol.

Der Gehalt des Cellulosebestandteils in dem Beschichtungsmittel beträgt 8 bis 22 Gew.-%.

Als **Lösemittel** können beispielweise Ketone, Acetate und/oder Alkohole eingesetzt werden. Beispielhaft seien Ethylacetat, Butanol, Isopropanol und/oder Ethanol genannt. Hierbei liegt der Gehalt an Lösemittel im Mittel zwischen 58 bis 77 Gew.-%.

**Bindemittel** können beispielhaft als Polyamidharz, Ketonharz, Acrylatharz und/oder Formaldehydharz vorliegen.

Allgemein können Bindemittel eingesetzt werden, welches im jeweiligen Lösungsmitteln löslich sind. Das Bindemittel liegt in einem Gehalt von Bindemittel 2 bis 7 Gew.-% im Beschichtungsmittel vor.

Die dem Beschichtungsmittel zugesetzten **Co-Bindemittel** in einer Menge von 4 bis 11 Gew.-% haben die Aufgabe die Flexibilität/Sprödigkeit des Beschichtungsmittels und damit erzeugten Beschichtungen einzustellen. Beispielhaft seien Celluloseacetobutyrat, Celluloseacetoproprionat, Celluloseacetat und/oder Polyacrylate wie Styrolacrylat genannt.

Beispiele für im Bindemittel eingesetzte **Weichmacher** sind epoxidiertes Sojaöl, Alkonsulfonsäureester und/oder Polyolester und liegen in einem Gehalt von 3 bis 9 Gew.-% vor.

Die **Farbmittel** (f) können als Pigmentpräparation, organische Farbpigmente und/oder anorganische Pigmente vorliegen. Als Beispiele für anorganische Pigmente seien Ruß und Titandioxid genannt. Falls Farbmittel eingesetzt sind, so können diese bis zu einem Gehalt von 14 Gew.-% vorliegen.

Verwendung findet das vorstehend beschriebene Beschichtungsmittel erfindungsgemäß für Oberflächen-Beschichtungen und Tauchkappen für Schreib-, Zeichen- oder Malgeräte.

Die Geräte, Artikel liegen als extrudierte Stifte auf Basis von WPC (wood plastic compounds) und/oder aus Kunststoff vor. Hierbei ist das mindestens eine Grundpolymer im WPC und/oder Kunststoff als Polypropylen (PP), Polyethylen (PE), Polyamid (PA), Polyacrylat, Polyurethan (PU), thermoplastische Polymere (TPE) und/oder Polyvinylchlorid (PVC) ausgebildet.

Das farbige und/oder farblose Beschichtungsmittel wird in der Regel nach herkömmlicher Beschichtungstechnik auf die zu beschichtenden Gegenstände ein- oder mehrschichtig aufgebracht und getrocknet. Diese Verfahren werden seit langem bei der Beschichtung holzgefasster Stifte/Schäfte eingesetzt.

Es handelt sich hierbei um die Verfahren Tauchen und Polieren.

## Patentansprüche

1. **Verwendung eines** Beschichtungsmittel für OberflächenBeschichtung und Tauchkappen für Stifte zum Schreiben, Zeichnen oder Malen, wobei die Stifte als extrudierte Stifte mit Schäften auf Basis von WPC (wood plastic compounds) und/oder aus Kunststoffen ausgebildet sind,
wobei das Beschichtungsmittel mindestens bestehend aus mindestens einem Celluloseanteil, mindestens einem Bindemittel, mindestens einem Weichmacher ausgebildet ist,
wobei das WPC und/oder Kunstoff mindestens ein Grundpolymer aufweist, wobei das mindestens eine Grundpolymer im WPC und/oder Kunststoff als Polypropylen (PP), Polyethylen (PE), Polyamid (PA), Polyacrylat, Polyurethan (PU), thermoplastische Polymere (TPE) und/oder Polyvinylchlorid (PVC) ausgebildet ist,
wobei das Mittel mindestens einen Haftvermittler aufweist,
wobei der Haftvermittler als ein Silan mit funktionellen Gruppen ausgebildet ist,
wobei das Silan als organofunktionelles Silan, insbesondere als epoxifunktionelles Silan ausgebildet ist
und wobei der Gehalt an Silan im Beschichtungsmittel 1 bis 8 Gew.-% beträgt.

2. **Verwendung eines Beschichtungsmittels** nach Anspruch 1, **dadurch gekennzeichnet,**
**dass** der Celluloseanteil als Nitrocellulose vorliegt
**und dass** die Nitrocellulose in Form von Nitrocellulosechips mit Weichmacheranteil, als pelletierte Nitrocellulose und/oder in phlegmatisierter, angefeuchteter Form vor.

3. **Verwendung eines Beschichtungsmittels** nach mindestens einem der vorstehenden Ansprüche,
**dadurch gekennzeichnet,**
**dass** das Mittel im Wesentlichen aus
| | |
|---|---|
| Celluloseanteil | 8 bis 22 Gew.-% |
| Lösemittel | 58 bis 77 Gew.-% |
| Co-Bindemittel | 4 bis 11 Gew.-% |
| Bindemittel | 2 bis 7 Gew.-% |
| Weichmacher | 3 bis 9 Gew.-% |
| Haftvermittler | 1 bis 8 Gew.-% |
| Farbmittel | 0 bis 8 Gew.-% |
zusammengesetzt ist.

## Claims

1. Use of a coating agent for surface-coating and protective caps for pencils for writing, drawing or colouring, wherein the pencils are constructed as extruded pencils with shanks on the basis of WPC (wood/plastic compounds) and/or of plastics materials, wherein the coating agent is formed so as to at least consist of at least one cellulose component, at least one binder and at least one softener,
wherein the WPC and/or plastics material comprises or comprise at least one basic polymer, wherein the at least one basic polymer in the WPC and/or plastics material is formed as polypropylene (PP), polyethylene (PE), polyamide (PA), polyacrylate, polyurethane (PU), thermoplastic polymers (TPE) and/or polyvinylchloride (PVC),
wherein the agent comprises at least one coupling agent,
wherein the coupling agent is formed as a silane with functional groups,
wherein the silane is formed as organo-functional silane, particularly as epoxy-functional silane,
and wherein the silane content in the coating agent is 1 to 8 weight percent.

2. Use of a coating agent according to claim 1,
**characterised in that** the cellulose component is present as nitrocellulose and the nitrocellulose is present in the form of nitrocellulose chips with a softener component, as pelletised nitrocellulose and/or in stabilised, moistened form.

3. Use of a coating agent according to at least one of the preceding claims,
**characterised in that**
the agent is substantially composed of
| | |
|---|---|
| cellulose component | 8 to 22 weight % |
| solvent | 58 to 77 weight % |
| co-binder | 4 to 11 weight % |
| binder | 2 to 7 weight % |
| softener | 3 to 9 weight % |
| coupling agent | 1 to 8 weight % |
| colorant | 0 to 8 weight %. |

## Revendications

1. Utilisation d'un milieu de recouvrement pour un recouvrement de surface et de capuchons destinés à des crayons pour écrire, dessiner ou peindre, dans laquelle les crayons sont formés sous la forme de crayons extrudés avec des tiges à base de WPC (wood plastic compounds (composites bois-plastique)) et/ou de matières plastiques,
le milieu de recouvrement étant formé en comprenant au moins une proportion de cellulose, au moins un liant, et au moins un plastifiant,
le WPC et/ou la matière plastique comprend au moins un polymère de base, le au moins un polymère de base étant réalisé dans le WPC et/ou la matière plastique sous la forme de polypropylène (PP), de polyéthylène (PE), de polyamide (PA), de polyacrylate, de polyuréthane (PU), de polymères thermoplastiques (TPE) et/ou de chlorure de polyvinyle (PVC),
le milieu présente au moins promoteur d'adhérence,
le promoteur d'adhérence est réalisé sous la forme d'un silane comportant des groupes fonctionnels,
le silane est réalisé sous la forme d'un silane organofonctionnel, en particulier un silane époxy-fonctionnel
et la teneur en silane dans le milieu de recouvrement est de 1 à 8 % en poids.

2. Utilisation d'un milieu de recouvrement selon la revendication 1,
**caractérisée en ce que**
la proportion de cellulose est présente sous forme de nitrocellulose,
et **en ce que** la nitrocellulose est sous la forme de copeaux de nitrocellulose avec une proportion de plastifiant, sous la forme de granulés de nitrocellulose en vrac et/ou sous forme une flegmatisée et humidifiée.

3. Utilisation d'un milieu de recouvrement selon au moins l'une quelconque des revendications précédentes,
**caractérisée en ce que**
le milieu est essentiellement constitué de
| | |
|---|---|
| proportion de cellulose | 8 à 22 % en poids |
| solvant | 58 à 77 % en poids |
| co-liant | 4 à 11 % en poids |
| liant | 2 à 7 % en poids |
| plastifiant | 3 à 9 % en poids |
| promoteur d'adhérence | 1 à 8 % en poids |
| colorant | 0 à 8 % en poids. |
